# EUROPÄISCHE PATENTSCHRIFT

(11) **EP 2 653 765 B1**
(45) Veröffentlichungstag und Bekanntmachung des Hinweises auf die Patenterteilung: **27.02.2019**
(21) Anmeldenummer: 12164962.8
(22) Anmeldetag: 20.04.2012
(51) Int. Cl.: F16L 11/22, B32B 1/08, B32B 25/08, F16L 53/00, F28D 7/12, F16L 11/04, F01N 3/20

(54) **Rohrleitung für ein zu temperierendes fluides Medium**
Pipe for a fluid to be warmed up
Conduite pour un milieu fluidique à tempérer

(43) Veröffentlichungstag der Anmeldung: 23.10.2013
(73) Patentinhaber: TI Automotive (Heidelberg) GmbH, 69123 Heidelberg (DE)
(72) Erfinder: Hersel, Walter, 71229 Leonberg (DE); Jensen, Hans, 73265 Dettingen unter Teck (DE)
(74) Vertreter: Rohmann, Michael

(56) Entgegenhaltungen:
- EP-A1- 1 705 050
- EP-A2- 0 207 015
- EP-A2- 1 698 769
- WO-A2-2008/005829
- DE-A1- 19 944 950
- DE-A1-102007 000 526
- DE-U1-202008 014 425
- FR-A1- 2 697 892
- FR-A1- 2 900 063
- GB-A- 2 290 848
- US-A- 4 236 953
- US-A- 5 884 475

## Beschreibung

Die Erfindung betrifft eine Rohrleitung für ein zu temperierendes fluides Medium, insbesondere für eine zu temperierende Harnstofflösung. Mit dem Begriff fluides Medium ist vorzugsweise ein flüssiges Medium gemeint. Die erfindungsgemäße Rohrleitung dient insbesondere zum Erwärmen des fluiden bzw. flüssigen Mediums und besonders bevorzugt zum Erwärmen einer Harnstofflösung.

EP 1 705 050 A1 beschreibt ein Leitungssystem für Fluide auf ein Kraftstoffleitunssystem für Benzin- oder Dieselmotoren. GB 2 290 848 A betrifft ein Mehrkanalrohr für den Transport fluider Medien. In Kraftfahrzeugen, insbesondere in Fahrzeugen mit Dieselmotor, ist in der Regel ein sogenanntes SCR-System mit einem SCR-Katalysator für die Abgasbehandlung vorhanden (SCR: Selective Catalytic Reduction). Für eine effektive Reduzierung der im Abgas eines Kraftfahrzeuges enthaltenen Stickoxide wird dem Abgas vor einem SCR-Katalysator eine Harnstofflösung zudosiert. Eine solche Harnstofflösung bzw. wässrige Harnstofflösung hat den Nachteil, dass Harnstoff bei Temperaturen unter -11 °C gefriert und teilweise auskristallisiert. Dadurch wird eine weitere funktionssichere Zufuhr der Harnstofflösung behindert oder vollständig blockiert und eine effektive Reduzierung der Stickoxide im Abgas beeinträchtigt bzw. verhindert. Um derartige Störungen zu vermeiden, werden die Zuführungsleitungen bzw. Rohrleitungen für die Harnstofflösung beheizt. Es ist bereits bekannt, eine solche Beheizung als elektrische Beheizung durchzuführen und dazu einen oder mehrere Heizdrähte an der Rohrleitung oder in der Rohrleitung anzuordnen. Grundsätzlich ist es auch bereits bekannt, eine Beheizung mit Hilfe von erwärmten flüssigen Medien durchzuführen. Die meisten bekannten Maßnahmen haben den Nachteil, dass sie nur aufwendig bzw. kostenaufwendig realisierbar sind und/oder eine ausreichend effektive Temperierung bzw. Erwärmung des zu temperierenden fluiden Mediums nicht gewährleistet ist.

Demgegenüber liegt der Erfindung das technische Problem zugrunde, eine Rohrleitung der eingangs genannten Art anzugeben, die wenig aufwendig und insbesondere wenig kostenaufwendig realisierbar ist und mit der nichtsdestoweniger eine sehr effektive Temperierung des fluiden Mediums bzw. der Harnstofflösung möglich ist.

Zur Lösung dieses technischen Problems lehrt die Erfindung, eine Rohrleitung für ein zu temperierendes fluides Medium, insbesondere für eine zu temperierende Harnstofflösung bzw. wässrige Harnstofflösung, wobei ein Innenrohr für das zu temperierende fluide Medium oder für ein fluides Temperiermedium vorgesehen ist, wobei das Innenrohr von einem Außenrohr umgeben wird und parallel bzw. im Wesentlichen parallel zum Außenrohr verläuft, wobei zwischen Innenrohr und Außenrohr zumindest ein Leitungskanal für das fluide Temperiermedium oder für das zu temperierende fluide Medium angeordnet ist und wobei das Innenrohr und das Außenrohr aus thermoplastischem Kunststoff bzw. im Wesentlichen aus thermoplastischem Kunststoff bestehen und wobei das Aggregat aus Innenrohr und Außenrohr durch Koextrusion hergestellt ist.

Wie oben bereits dargelegt handelt es sich bei dem zu temperierenden fluiden Medium vorzugsweise um ein zu temperierendes flüssiges Medium und zwar insbesondere um ein zu erwärmendes flüssiges Medium. Es liegt im Rahmen der Erfindung, dass es sich bei dem zu temperierenden fluiden Medium um eine Harnstofflösung bzw. wässrige Harnstofflösung handelt. Zweckmäßigerweise ist die Rohrleitung für die zu temperierende bzw. zu erwärmende Harnstofflösung Bestandteil eines SCR-Systems in einem Kraftfahrzeug. Das fluide Temperiermedium dient zur Temperierung bzw. zur Erwärmung des zu temperierenden fluiden Mediums. Es liegt im Rahmen der Erfindung, dass es sich bei dem fluiden Temperiermedium um ein erwärmtes flüssiges Temperiermedium handelt.

Es liegt weiterhin im Rahmen der Erfindung, dass es sich bei der Rohrleitung um eine koextrudierte Rohrleitung handelt. Damit ist gemeint, dass das Innenrohr und das Außenrohr und gegebenenfalls weiter unten noch erläuterte weitere Komponenten gemeinsam extrudiert bzw. koextrudiert werden. Zweckmäßigerweise besteht die koextrudierte Rohrleitung aus thermoplastischem Kunststoff bzw. im Wesentlichen aus thermoplastischem Kunststoff. Es ist also ein Kunststoff einzusetzen, der sich für eine Extrusion bzw. Koextrusion eignet.

Eine empfohlene Ausführungsform der Erfindung zeichnet sich dadurch aus, dass in dem Innenrohr das zu temperierende fluide Medium aufgenommen ist bzw. strömt und dass in dem zumindest einen Leitungskanal zwischen Innenrohr und Außenrohr das fluide Temperiermedium aufgenommen ist bzw. strömt.

Es liegt weiterhin im Rahmen der Erfindung, dass die Innenwand des Außenrohres über eine Mehrzahl von koextrudierten Stegen mit der Außenwand des Innenrohres verbunden ist und dass sich die koextrudierten Stege in Längsrichtung der Rohrleitung erstrecken. Koextrudierte Stege meint insbesondere, dass die Stege gemeinsam mit dem Innenrohr und dem Außenrohr extrudiert bzw. koextrudiert werden können. Es liegt im Rahmen der Erfindung, dass auch die koextrudierten Stege aus thermoplastischem Kunststoff bestehen bzw. aus dem thermoplastischen Kunststoff der übrigen Rohrleitung bestehen. Es liegt weiterhin im Rahmen der Erfindung, dass die Stege an die Innenwand des Außenrohres und an die Außenwand des Innenrohres einstückig angeformt sind. Empfohlenermaßen verlaufen die Stege über die Länge der Rohrleitung und zwar vorzugsweise ohne Unterbrechung bzw. ohne Lücken über die Länge der Rohrleitung. Durch die Stege wird der Raum zwischen Innenrohr und Außenrohr bevorzugt in eine Mehrzahl von Leitungskanälen für das fluide Temperiermedium oder für das zu temperierende fluide Medium unterteilt. Zweckmäßigerweise sind die Stege gleichmäßig über den Umfang des Innenrohres bzw. über den Umfang des Außenrohres verteilt angeordnet. Es liegt im Rahmen der Erfindung, dass die Stege parallel zueinander in Längsrichtung der Rohrleitung verlaufen. Vorzugsweise ist der Querschnitt der vom Innenrohr, vom Außenrohr und den Stegen begrenzten Leitungskanäle gleich groß bzw. im Wesentlichen gleich groß. Es empfiehlt sich, dass alle Leitungskanäle die gleiche Querschnittsform bzw. im Wesentlichen die gleiche Querschnittsform aufweisen. Zweckmäßigerweise ist die Innenwand des Außenrohres mit der Außenwand des Innenrohres über zumindest zwei Stege, bevorzugt zumindest drei Stege und besonders bevorzugt zumindest vier Stege verbunden.

Es liegt weiterhin im Rahmen der Erfindung, dass ein koextrudiertes äußeres Rohr vorgesehen ist, dass das Aggregat aus Innenrohr und Außenrohr in dem äußeren Rohr angeordnet ist bzw. von dem äußeren Rohr umgeben wird, dass das äußere Rohr in Längsrichtung des Aggregates und parallel bzw. im Wesentlichen parallel zu dem Aggregat verläuft und dass zwischen dem Außenrohr und dem äußeren Rohr zumindest ein Außenleitungskanal für das fluide Temperiermedium angeordnet ist. Koextrudiertes äußeres Rohr meint insbesondere, dass das äußere Rohr gemeinsam mit dem Außenrohr und dem Innenrohr und gegebenenfalls mit den Stegen extrudiert bzw. koextrudiert wird. Es liegt im Rahmen der Erfindung, dass das koextrudierte äußere Rohr aus einem thermoplastischen Kunststoff bzw. aus dem thermoplastischen Kunststoff der übrigen Rohrleitung besteht bzw. im Wesentlichen besteht.

Eine bevorzugte Ausführungsform der Erfindung ist dadurch gekennzeichnet, dass in dem Innenrohr das zu temperierende fluide Medium aufgenommen ist bzw. strömt, dass in dem zumindest einen Leitungskanal zwischen Innenrohr und Außenrohr das fluide Temperiermedium aufgenommen ist bzw. strömt und dass in dem zumindest einen Außenleitungskanal zwischen Außenrohr und äußerem Rohr ebenfalls das fluide Temperiermedium aufgenommen ist bzw. strömt.

Eine Ausführungsform der Erfindung zeichnet sich dadurch aus, dass in dem Innenrohr das fluide Temperiermedium aufgenommen ist bzw. strömt, dass in dem zumindest einen Leitungskanal zwischen Innenrohr und Außenrohr das zu temperierende fluide Medium aufgenommen ist bzw. strömt und dass in dem zumindest einen Außenleitungskanal zwischen Außenrohr und äußerem Rohr das fluide Temperiermedium aufgenommen ist bzw. strömt.

Es empfiehlt sich, dass die Innenwand des äußeren Rohres über eine Mehrzahl von koextrudierten Außenstegen mit der Außenwand des Außenrohres verbunden ist und dass sich die koextrudierten Außenstege in Längsrichtung der Rohrleitung erstrecken. Koextrudierte Außenstege meint insbesondere, dass die Außenstege gemeinsam mit dem Innenrohr, dem Außenrohr und dem äußeren Rohr und mit den Stegen extrudiert bzw. koextrudiert werden. Es liegt im Rahmen der Erfindung, dass die Außenstege an die Innenwand des äußeren Rohres und an die Außenwand des Außenrohres einstückig angeformt sind. Es liegt weiterhin im Rahmen der Erfindung, dass die Außenstege aus thermoplastischem Kunststoff bzw. aus dem thermoplastischen Kunststoff der übrigen Rohrleitung bestehen. Zweckmäßigerweise verlaufen die Außenstege über die Länge der Rohrleitung bzw. ohne Unterbrechung über die Länge der Rohrleitung. Die Außenstege unterteilen den Raum zwischen dem Außenrohr und dem äußeren Rohr in eine Mehrzahl von Außenleitungskanälen für das fluide Temperiermedium. Es empfiehlt sich, dass die Außenstege gleichmäßig über den Umfang des äußeren Rohres bzw. über den Umfang des Außenrohres verteilt angeordnet sind. Vorteilhafterweise haben die durch die Außenstege getrennten Außenleitungskanäle einen gleich großen Querschnitt und bevorzugt die gleiche Querschnittsform. Zweckmäßigerweise ist die Innenwand des äußeren Rohres über zumindest zwei Außenstege, vorzugsweise zumindest drei Außenstege und bevorzugt zumindest vier Außenstege mit der Außenwand des Außenrohres verbunden.

Es liegt weiterhin im Rahmen der Erfindung, dass die Stege und die Außenstege einen trapezförmigen Querschnitt aufweisen. Dabei verjüngen sich die Trapeze empfohlenermaßen zur Mitte der Rohrleitung hin. In vorteilhafter Ausgestaltung der Erfindung ist vorgesehen, dass die Stege in Bezug auf den Umfang des Außenrohres versetzt zu den Außenstegen angeordnet sind. Zweckmäßigerweise ist ein Steg in Bezug auf den Umfang des Außenrohres in der Mitte oder etwa in der Mitte zwischen zwei Außenstegen angeordnet.

Nach einer empfohlenen Ausführungsform der Erfindung beträgt die Wandstärke des Innenrohres und/oder die Wandstärke des Außenrohres und/oder die Wandstärke des äußeren Rohres 0,6 bis 3 mm, vorzugsweise 0,8 bis 2,5 mm, bevorzugt 0,9 bis 2,2 mm und besonders bevorzugt 1 bis 2 mm. - Es liegt im Rahmen der Erfindung, dass das Innenrohr und/oder das Außenrohr und/oder das äußere Rohr zylinderförmig bzw. im Wesentlichen zylinderförmig ausgebildet ist/sind. Es liegt weiterhin im Rahmen der Erfindung, dass das Innenrohr konzentrisch innerhalb des Außenrohres angeordnet ist und/oder dass das Außenrohr bzw. das Aggregat aus Innenrohr und Außenrohr konzentrisch innerhalb des äußeren Rohres angeordnet ist. Eine koaxiale Anordnung von Innenrohr und Außenrohr und/oder von Außenrohr und äußerem Rohr hat sich im Rahmen der Erfindung bewährt.

Gemäß empfohlener Ausführungsform der Erfindung beträgt das Verhältnis des Innendurchmessers d des Innenrohres zur radialen Weite rᵢ eines Leitungskanals zwischen Innenrohr und Außenrohr und/oder beträgt das Verhältnis des Innendurchmessers d des Innenrohres zur radialen Weite rₐ eines Außenleitungskanals zwischen Außenrohr und äußerem Rohr 3 bis 15, vorzugsweise 4 bis 14 und bevorzugte 4 bis 12. Es hat sich als vorteilhaft erwiesen, dass der Innendurchmesser d des Innenrohres 2 bis 15 mm, vorzugsweise 3 bis 13 mm und bevorzugt 4 bis 12 mm beträgt. Empfohlenermaßen beträgt die radiale Weite rᵢ eines Leitungskanals und/oder die radiale Weite rₐ eines Außenleitungskanals 0,5 bis 3,0 mm, vorzugsweise 0,6 bis 2,0 mm, bevorzugt 0,8 bis 1,5 mm und besonders bevorzugt 0,8 bis 1,2 mm.

Es liegt im Rahmen der Erfindung, dass die erfindungsgemäße Rohrleitung Bestandteil eines Kraftfahrzeuges ist und dass das Temperiermedium vorzugsweise erwärmte Kühlflüssigkeit bzw. erwärmtes Kühlwasser ist und/oder Kraftstoff bzw. zurückgeführter Kraftstoff ist. Nach einer Ausführungsform wird aus dem Kühlwasserkreislauf des Kraftfahrzeuges abgezweigtes erwärmtes Kühlwasser als Temperiermedium eingesetzt. Gemäß einer anderen Ausführungsvariante wird vom Motor des Kraftfahrzeuges zum Kraftstofftank zurückgeführter Kraftstoff als Temperiermedium verwendet.

Eine bevorzugte Ausführungsform der Erfindung ist dadurch gekennzeichnet, dass das Temperiermedium zunächst durch den zumindest einen Leitungskanal zwischen Innenrohr und Außenrohr in eine erste Richtung längs der Rohrleitung strömt, dass ein Umlenkbereich zur Umlenkung des Temperiermediums in den zumindest einen Außenleitungskanal zwischen Außenrohr und äußerem Rohr vorgesehen ist und dass das Temperiermedium durch den zumindest einen Außenleitungskanal in eine zu der ersten Richtung entgegengesetzten zweiten Richtung längs der Rohrleitung strömt. Zweckmäßigerweise wird das Temperiermedium somit zwischen Innenrohr und Außenrohr einerseits und zwischen Außenrohr und äußerem Rohr andererseits gleichsam im Gegenstrom geführt. Dabei strömt das Temperiermedium vorzugsweise durch eine Mehrzahl von durch die Stege getrennten Leitungskanälen sowie durch eine Mehrzahl von durch die Außenstege getrennten Außenleitungskanälen.

Empfohlenermaßen besteht die Rohrleitung bzw. besteht die Rohrleitung im Wesentlichen aus thermoplastischem Kunststoff. Gemäß einer bevorzugten Ausführungsvariante besteht die Rohrleitung aus einem Polyamid bzw. im Wesentlichen aus einem Polyamid. Bei dem Polyamid kann es sich insbesondere um Polyamid 12 handeln. - Eine Ausführungsform der Erfindung ist dadurch gekennzeichnet, dass die Wärmeleitfähigkeit des Materials des Innenrohres höher ist als die Wärmeleitfähigkeit des Materials des äußeren Rohres und/oder höher ist als die Wärmeleitfähigkeit des Materials des Außenrohres. Grundsätzlich können Innenrohr und/oder Außenrohr und/oder äußeres Rohr aus dem gleichen thermoplastischen Kunststoff bestehen und die Wärmeleitfähigkeit kann über dem Kunststoff zugegebene Zusätze eingestellt werden.

Es liegt im Rahmen der Erfindung, dass das Aggregat aus Innenrohr, Außenrohr und äußerem Rohr von zumindest einem weiteren äußeren Rohr umgeben wird und dass Innenrohr, Außenrohr, äußeres Rohr und das zumindest eine weitere äußere Rohr konzentrisch zueinander bzw. koaxial angeordnet sind. Es liegt fernerhin im Rahmen der Erfindung, dass auch das weitere äußere Rohr über weitere äußere Stege mit dem äußeren Rohr verbunden ist. Zweckmäßigerweise handelt es sich auch bei dem zumindest einen weiteren äußeren Rohr um ein koextrudiertes weiteres äußeres Rohr, das gemeinsam mit den übrigen Komponenten der Rohrleitung extrudiert bzw. koextrudiert wird. Es empfiehlt sich, dass auch durch den Zwischenraum bzw. durch die Kanäle zwischen äußerem Rohr und weiterem äußeren Rohr das fluide Temperiermedium strömt, und zwar vorzugsweise in eine Richtung, die entgegengesetzt zu der Strömungsrichtung ist, mit der das Temperiermedium durch die Außenleitungskanäle zwischen Außenrohr und äußerem Rohr strömt. - Gemäß einer Ausführungsform der Erfindung kann die Rohrleitung von einem Schutzmantel - beispielsweise in Form eines Wellrohres - umgeben sein. Dieser Schutzmantel dient dann insbesondere dem Schutz vor mechanischen Einflüssen.

Der Erfindung liegt die Erkenntnis zugrunde, dass mit der erfindungsgemäßen Rohrleitung eine überraschend effektive Temperierung eines fluiden Mediums, insbesondere einer Harnstofflösung möglich ist. Eine durch die erfindungsgemäße Rohrleitung geführte Harnstofflösung kann auf einfache und problemlose Weise vor dem Einfrieren bzw. Auskristallisieren wirksam geschützt werden. Hervorzuheben ist fernerhin, dass die erfindungsgemäße Rohrleitung mit relativ einfachen und wenig aufwendigen Mitteln realisierbar ist. Auf eine aufwendige elektrische Beheizung mit Heizdrähten oder dergleichen kann in vorteilhafter Weise verzichtet werden. Die erfindungsgemäße Rohrleitung kann verhältnismäßig kostengünstig verwirklicht bzw. hergestellt werden. Fernerhin zeichnet sich die erfindungsgemäße Rohrleitung auch durch optimale Festigkeit und mechanische Resistenz aus.

Nachfolgend wird die Erfindung anhand einer lediglich ein Ausführungsbeispiel darstellenden Zeichnung näher erläutert. Es zeigen in schematischer Darstellung:
Fig. 1 eine Seitenansicht einer erfindungsgemäßen Rohrleitung im Schnitt und
Fig. 2 einen Schnitt A-A durch den Gegenstand nach Fig. 1.

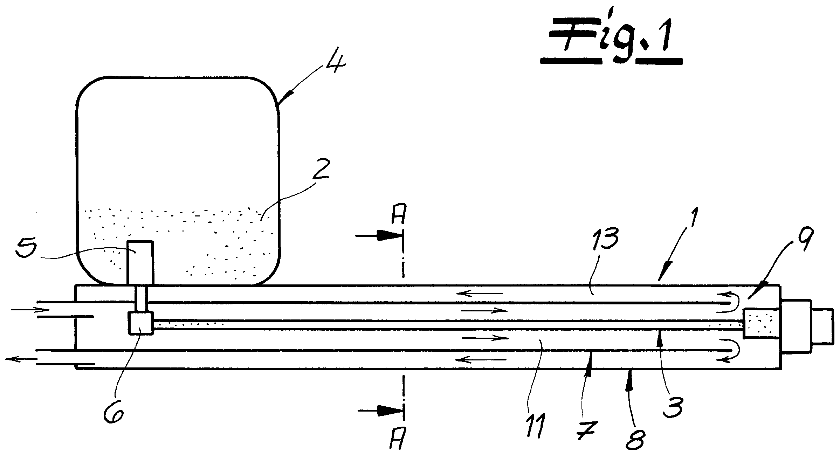

Die Figuren zeigen eine erfindungsgemäße Rohrleitung 1 für eine zu temperierende bzw. zu erwärmende Harnstofflösung 2. Die Rohrleitung 1 gemäß Figur 1 weist ein Innenrohr 3 zur Zuführung der Harnstofflösung 2 zu einem nicht darstellten SCR-Katalysator auf. Im Ausführungsbeispiel ist die Harnstofflösung 2 in einem Tank 4 aufgenommen und wird mittels einer Pumpe 5 über das Ventil 6 in das Innenrohr 3 eingebracht. Das Innenrohr 3 wird von einem Außenrohr 7 umgeben, sodass Innenrohr 3 und Außenrohr 7 konzentrisch bzw. koaxial zueinander angeordnet sind. Das Außenrohr 7 bzw. das Aggregat aus Innenrohr 3 und Außenrohr 7 wird von einem äußeren Rohr 8 umgeben, sodass das Innenrohr 3, das Außenrohr 7 und das äußere Rohr 8 konzentrisch bzw. koaxial zueinander angeordnet sind.

In Figur 1 ist die Strömung bzw. die Strömungsrichtung eines fluiden Temperiermediums für die Erwärmung der Harnstofflösung durch Pfeile angedeutet worden. Die in den Figuren dargestellte Rohrleitung 1 ist vorzugsweise Bestandteil eines Kraftfahrzeuges und bei dem Temperiermedium handelt es sich nach einer Ausführungsform um aus dem Kühlwasserkreislauf des Kraftfahrzeuges abgezweigtes erwärmtes Kühlwasser. Das Temperiermedium strömt zunächst in Figur 1 von links nach rechts durch den Zwischenraum zwischen Innenrohr 3 und Außenrohr 7 bis zu einem Umlenkbereich 9. Hier steht der Zwischenraum zwischen Innenrohr 3 und Außenrohr 7 in Fluidverbindung mit dem Zwischenraum zwischen dem Außenrohr 7 und dem äußeren Rohr 8. Das Temperiermedium wird im Umlenkbereich 9 in den Zwischenraum zwischen Außenrohr 7 und äußerem Rohr 8 umgelenkt und strömt jetzt in die entgegengesetzte Richtung in Figur 1 von rechts nach links. Auf diese Weise wird eine sehr effektive Temperierung der Harnstofflösung im Innenrohr 3 erreicht.

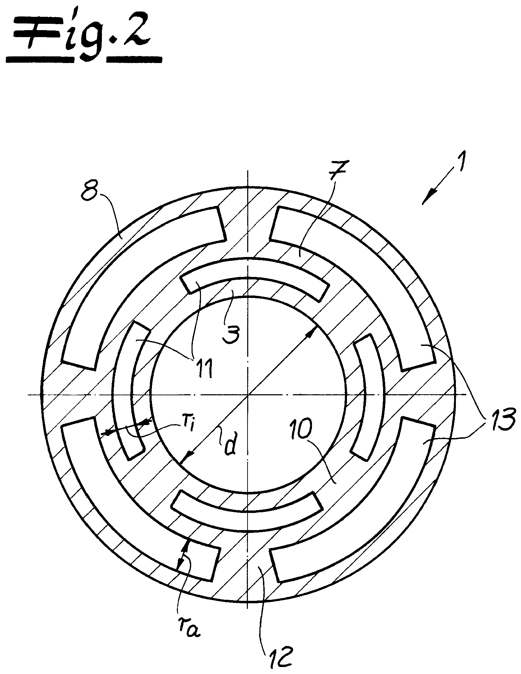

Bei der Rohrleitung 1 handelt es sich im Übrigen vorzugsweise um eine koextrudierte Rohrleitung aus thermoplastischem Kunststoff, wobei Innenrohr 3, Außenrohr 7 und äußeres Rohr 8 gemeinsam extrudiert bzw. koextrudiert werden. Figur 2 zeigt einen Schnitt durch die Rohrleitung 1 gemäß Figur 1. Es ist erkennbar, dass die Innenwand des Außenrohres 7 im Ausführungsbeispiel über vier Stege 10 mit der Außenwand des Innenrohres 3 verbunden ist. Die Stege 10 erstrecken sich vorzugsweise ohne Unterbrechung in Längsrichtung der Rohrleitung 1. Auf diese Weise wird der Zwischenraum zwischen dem Innenrohr 3 und dem Außenrohr 7 im Ausführungsbeispiel in vier Leitungskanäle 11 für das Temperiermedium unterteilt. In der Figur 2 ist weiterhin erkennbar, dass die Innenwand des äußeren Rohres 8 im Ausführungsbeispiel über vier Außenstege 12 mit der Außenwand des Außenrohres 7 verbunden ist. Zweckmäßigerweise erstrecken sich die Außenstege 12 ohne Unterbrechung über die Länge der Rohrleitung 1 in Längsrichtung der Rohrleitung. Somit wird der Zwischenraum zwischen dem Außenrohr 7 und dem äußeren Rohr 8 in vier Außenleitungskanäle 13 unterteilt. Vorzugsweise und im Ausführungsbeispiel sind die Stege 10 und die Außenstege 12 parallel zueinander angeordnet. Es liegt im Rahmen der Erfindung, dass die Stege 10 und die Außenstege 12 mit dem Innenrohr 3, dem Außenrohr 7 und dem äußeren Rohr 8 gemeinsam extrudiert bzw. koextrudiert werden. Zweckmäßigerweise und im Ausführungsbeispiel weisen die Stege 10 und die Außenstege 12 einen trapezförmigen Querschnitt auf. Dabei verjüngen sich die Trapeze vorzugsweise zur Mitte der Rohrleitung hin.

In Figur 2 ist erkennbar, dass nach bevorzugter Ausführungsform und im Ausführungsbeispiel sowohl das Innenrohr 3 als auch das Außenrohr 7 und auch das äußere Rohr 8 zylinderförmig mit kreisförmigem Querschnitt ausgebildet sind. Das Innenrohr 3 ist konzentrisch innerhalb des Außenrohres 7 angeordnet und das Aggregat aus Innenrohr 3 und Außenrohr 7 ist konzentrisch innerhalb des äußeren Rohres 8 angeordnet. - Der Innendurchmesser d des Innenrohres 3 beträgt vorzugsweise 3 bis 8 mm. Die radiale Weite rᵢ eines Leitungskanals 11 beträgt zweckmäßigerweise 0,8 bis 1,2 mm. Bevorzugt beträgt auch die radiale Weite rₐ eines Außenleitungskanals 13 0,8 bis 1,2 mm. Empfohlenermaßen beträgt die Wandstärke des Innenrohres 3 und die Wandstärke des Außenrohres 7 sowie die Wandstärke des äußeren Rohres 8 1 bis 2 mm.

Zweckmäßigerweise besteht das in der Figur 2 dargestellte Aggregat aus einem thermoplastischen Kunststoff und dieses Aggregat ist durch Koextrusion hergestellt worden. Bei dem thermoplastischen Kunststoff mag es sich um Polyamid 12 handeln. - Es ist noch darauf hinzuweisen, dass gemäß bevorzugter Ausführungsform und im Ausführungsbeispiel nach Figur 2 die Stege 10 bezüglich des Umfangs des Außenrohres 7 versetzt zu den Außenstegen 12 angeordnet sind. Dabei ist vorzugsweise und im Ausführungsbeispiel ein Steg 10 im mittleren Bereich des benachbarten Außenleitungskanals 13 angeordnet und ein Außensteg 12 ist im mittleren Bereich des benachbarten Leitungskanals 11 angeordnet.

Gemäß einer alternativen Ausführungsform der Erfindung kann das zu temperierende fluide Medium bzw. die Harnstofflösung auch durch die Leitungskanäle 11 zwischen Innenrohr 3 und Außenrohr 7 strömen. In diesem Fall strömt das Temperiermedium zweckmäßigerweise zum einen durch das Innenrohr 3 und zum anderen durch die Außenleitungskanäle 13 zwischen Außenrohr 7 und äußerem Rohr 8.

## Patentansprüche

1. Rohrleitung (1) für ein zu temperierendes fluides Medium, insbesondere für eine zu temperierende Harnstofflösung (2), wobei ein Innenrohr (3) für das zu temperierende fluide Medium oder für ein fluides Temperiermedium vorgesehen ist, wobei das Innenrohr (3) von einem Außenrohr (7) umgeben wird und parallel bzw. im Wesentlichen parallel zum Außenrohr (7) verläuft, wobei zwischen Innenrohr (3) und Außenrohr (7) eine Mehrzahl von Leitungskanälen (11) für das fluide Temperiermedium oder für das zu temperierende fluide Medium angeordnet ist, wobei das Innenrohr (3) und das Außenrohr (7) aus thermoplastischem Kunststoff bzw. im Wesentlichen aus thermoplastischem Kunststoff bestehen, wobei das Aggregat aus Innenrohr (3) und Außenrohr (7) durch Koextrusion hergestellt ist,
wobei die Innenwand des Außenrohres (7) über eine Mehrzahl von koextrudierten Stegen (10) mit der Außenwand des Innenrohres (3) verbunden ist, wobei sich die koextrudierten Stege (10) in Längsrichtung der Rohrleitung (1) erstrecken,
wobei zumindest ein koextrudiertes äußeres Rohr (8) vorgesehen ist, wobei das Aggregat aus Innenrohr (3) und Außenrohr (7) in dem äußeren Rohr (8) angeordnet ist, wobei das äußere Rohr (8) in Längsrichtung des Aggregates und parallel bzw. im Wesentlichen parallel zu dem Aggregat verläuft und wobei zwischen dem Außenrohr (7) und dem äußeren Rohr (8) eine Mehrzahl von Außenleitungskanälen (13) für das fluide Temperiermedium angeordnet ist,
wobei die Innenwand des äußeren Rohres (8) über eine Mehrzahl von koextrudierten Außenstegen (12) mit der Außenwand des Außenrohres (7) verbunden ist und wobei sich die koextrudierten Außenstege (12) in Längsrichtung der Rohrleitung (1) erstrecken
und wobei die Außenstege (12) gemeinsam mit dem Innenrohr (3), dem Außenrohr (7) und dem äußeren Rohr (8) sowie mit den Stegen (10) koextrudiert werden **dadurch gekennzeichnet, dass** die Stege (10) und die Außenstege (12) einen trapezförmigen Querschnitt aufweisen.

2. Rohrleitung nach Anspruch 1, wobei in dem Innenrohr (3) das zu temperierende fluide Medium aufgenommen ist bzw. strömt und wobei in dem zumindest einen Leitungskanal (11) zwischen Innenrohr (3) und Außenrohr (7) das fluide Temperiermedium aufgenommen ist bzw. strömt.

3. Rohrleitung nach einem der Ansprüche 1 oder 2, wobei in dem zumindest einen Leitungskanal (11) das zu temperierende fluide Medium aufgenommen ist bzw. strömt und wobei in dem Innenrohr (3) und in zumindest einem Außenleitungskanal (13) zwischen dem Außenrohr (7) und einem äußeren Rohr (8) das fluide Temperiermedium aufgenommen ist bzw. strömt.

4. Rohrleitung nach einem der Ansprüche 1 bis 3, wobei die Wandstärke des Innenrohres (3) und/oder des Außenrohres (7) und/oder des äußeren Rohres (8) 0,6 bis 3 mm, vorzugsweise 0,8 bis 2,5 mm und bevorzugt 0,9 bis 2,2 mm beträgt.

5. Rohrleitung nach einem der Ansprüche 1 bis 4, wobei das Innenrohr (3) und/oder das Außenrohr (7) und/oder das äußere Rohr (8) zylinderförmig bzw. im Wesentlichen zylinderförmig ausgebildet ist/sind.

6. Rohrleitung nach einem der Ansprüche 1 bis 5, wobei das Innenrohr (3) konzentrisch innerhalb des Außenrohres (7) angeordnet ist und/oder wobei das Außenrohr (7) bzw. das Aggregat aus Innenrohr (3) und Außenrohr (7) konzentrisch innerhalb des äußeren Rohres (8) angeordnet ist.

7. Rohrleitung nach einem der Ansprüche 1 bis 6, wobei das Verhältnis des Innendurchmessers d des Innenrohres (3) zur radialen Weite rᵢ eines Leitungskanals (11) zwischen Innenrohr (3) und Außenrohr (7) und/oder zur radialen Weite rₐ eines Außenleitungskanals (13) zwischen Außenrohr (7) und äußerem Rohr (8) 3 bis 15, vorzugsweise 4 bis 14 und bevorzugt 4 bis 12 beträgt.

8. Rohrleitung nach einem der Ansprüche 1 bis 7, wobei der Innendurchmesser d des Innenrohres 2 bis 15 mm, vorzugsweise 3 bis 13 mm und bevorzugt 4 bis 12 mm beträgt.

9. Rohrleitung nach einem der Ansprüche 1 bis 8, wobei die radiale Weite rᵢ eines Leitungskanals (11) und/oder die radiale Weite rₐ eines Außenleitungskanals (13) 0,5 bis 3,0 mm, vorzugsweise 0,6 bis 2,0 mm und bevorzugt 0,8 bis 1,5 mm beträgt.

10. Rohrleitung nach einem der Ansprüche 1 bis 9, wobei die Rohrleitung (1) Bestandteil eines Kraftfahrzeuges ist und wobei das Temperiermedium vorzugsweise erwärmte Kühlflüssigkeit und/oder Kraftstoff bzw. zurückgeführter Kraftstoff ist.

11. Rohrleitung nach einem der Ansprüche 1 bis 10, wobei das Temperiermedium zunächst durch die Leitungskanäle (11) zwischen Innenrohr (3) und Außenrohr (7) in eine erste Richtung längs der Rohrleitung (1) strömt, wobei ein Umlenkbereich (9) zur Umlenkung des Temperiermediums in die Außenkanäle (13) zwischen Außenrohr (7) und äußerem Rohr (8) vorgesehen ist und wobei das Temperiermedium durch die Außenkanäle (13) in eine zu der ersten Richtung entgegengesetzten zweite Richtung längs der Rohrleitung (1) strömt.

## Claims

1. A pipeline (1) for a fluid medium to be temperature-controlled, in particular for a urea solution (2) to be temperature-controlled, wherein an inner pipe (3) is provided for the fluid medium to be temperature-controlled or for a fluid temperature-control medium, wherein the inner pipe (3) is surrounded by an outer pipe (7) and runs parallel or essentially parallel to the outer pipe (7), wherein a plurality of line channels (11) for the fluid temperature-control medium or for the fluid medium to be temperature-controlled is arranged between the inner pipe (3) and outer pipe (7), wherein the inner pipe (3) and outer pipe (7) consist of thermoplastic material or essentially of thermoplastic material, wherein the aggregate comprised of the inner pipe (3) and outer pipe (7) is fabricated via coextrusion,
wherein the inner wall of the outer pipe (7) is connected by a plurality of coextruded webs (10) with the outer wall of the inner pipe (3), wherein the coextruded webs (10) extend in the longitudinal direction of the pipeline (1),
wherein at least one coextruded external pipe (8) is provided, wherein the aggregate comprised of the inner pipe (3) and outer pipe (7) is arranged in the external pipe (8), wherein the external pipe (8) runs in the longitudinal direction of the aggregate and parallel or essentially parallel to the aggregate, and wherein a plurality of outer line channels (13) for the fluid temperature-control medium is arranged between the outer pipe (7) and external pipe (8),
wherein the inner wall of the external pipe (8) is connected by a plurality of coextruded outer webs (12) with the outer wall of the outer pipe (7), and wherein the coextruded outer webs (12) extend in the longitudinal direction of the pipeline (1),
and wherein the outer webs (12) together with the inner pipe (3), the outer pipe (7) and the external pipe (8) as well as with the webs (10) are coextruded, **characterized in that** the webs (10) and outer webs (12) have a trapezoidal cross section.

2. The pipeline according to claim 1, wherein the fluid medium to be temperature-controlled is accommodated or flows in the inner pipe (3), and wherein the fluid temperature-control medium is accommodated or flows in the at least one line channel (11) between the inner pipe (3) and outer pipe (7).

3. The pipeline according to one of claims 1 or 2, wherein the fluid medium to be temperature-controlled is accommodated or flows in the at least one line channel (11), and wherein the fluid temperature-control medium is accommodated or flows in the inner pipe (3) and in at least one external line channel (13) between the outer pipe (7) and an external pipe (8) .

4. The pipeline according to one of claims 1 to 3, wherein the wall thickness of the inner pipe (3) and/or the outer pipe (7) and/or the external pipe (8) measures 0.6 to 3 mm, preferably 0.8 to 2.5 mm, and most preferably 0.9 to 2.2 mm.

5. The pipeline according to one of claims 1 to 4, wherein the inner pipe (3) and/or the outer pipe (7) and/or the external pipe (8) are cylindrical or essentially cylindrical in design.

6. The pipeline according to one of claims 1 to 5, wherein the inner pipe (3) is concentrically arranged inside of the outer pipe (7) and/or wherein the outer pipe (7) or the aggregate comprised of the inner pipe (3) and outer pipe (7) is arranged concentrically inside of the external pipe (8).

7. The pipeline according to one of claims 1 or 6, wherein the ratio between the inner diameter d of the inner pipe (3) and the radial width r₁ of a line channel (11) between the inner pipe (3) and outer pipe (7) and/or the radial width rₐ of an outer line channel (13) between the outer pipe (7) and external pipe (8) measures 3 to 15, preferably 4 to 14, and most preferably 4 to 12.

8. The pipeline according to one of claims 1 to 7, wherein the inner diameter d of the inner pipe measures 2 to 15 mm, preferably 3 to 13 mm, and most preferably 4 and 12 mm.

9. The pipeline according to one of claims 1 to 8, wherein the radial width rᵢ of a line channel (11) and/or the radial width rₐ of an outer line channel (13) measures 0.5 to 3.0 mm, preferably 0.6 to 2.0 mm, and most preferably 0.8 to 1.5 mm.

10. The pipeline according to one of claims 1 to 9, wherein the pipeline (1) is part of a motor vehicle, and wherein the temperature-control medium is preferably heated cooling liquid and/or fuel or recirculated fuel.

11. The pipeline according to one of claims 1 to 10, wherein the temperature-control medium initially flows through the line channels (11) between the inner pipe (3) and outer pipe (7) in a first direction along the pipeline (1), wherein a deflection area (9) for deflecting the temperature-control medium into the outer channels (13) between the outer pipe (7) and external pipe (8) is provided, and wherein the temperature-control medium flows through the outer channels (13) in a second direction opposite the first direction along the pipeline (1).

## Revendications

1. Conduite (1) pour un milieu liquide thermorégulateur, notamment pour une solution d'urée thermorégulateur (2), un conduit intérieur (3) pour le milieu liquide à thermoréguler ou pour un milieu thermorégulateur liquide étant prévu, le conduit intérieur (3) étant entouré par un conduit extérieur (7) et passant parallèlement ou pour l'essentiel parallèlement au conduit extérieur (7), une pluralité de canaux de conduction (11) pour le milieu thermorégulateur liquide ou pour le milieu liquide à thermoréguler étant disposée entre le conduit intérieur (3) et le conduit extérieur (7), le conduit intérieur (3) et le conduit extérieur (7) étant en matière thermoplastique ou pour l'essentiel en matière thermoplastique, l'ensemble composé du conduit intérieur (3) et du conduit extérieur (7) étant fabriqué par coextrusion,
la paroi intérieure du conduit extérieur (7) étant reliée par une pluralité de nervures coextrudées (10) à la paroi extérieure du conduit intérieur (3), les nervures coextrudées (10) s'étendant dans la direction longitudinale de la conduite (1),
au moins un tube extérieur coextrudé (8) étant prévu, l'ensemble composé du conduit intérieur (3) et du conduit extérieur (7) étant disposé dans le tube extérieur (8), le tube extérieur (8) passant dans la direction longitudinale de l'ensemble et parallèlement ou pour l'essentiel parallèlement à l'ensemble et une pluralité de canaux de conduction extérieurs (13) pour le milieu thermorégulateur liquide étant disposée entre le conduit extérieur (7) et le tube extérieur (8),
la paroi intérieure du tube extérieur (8) étant reliée par une pluralité de nervures extérieures coextrudées (12) à la paroi extérieure du conduit extérieur (7) et les nervures extérieures coextrudées (12) s'étendant dans la direction longitudinale de la conduite (1),
et les nervures extérieures (12) étant coextrudées conjointement avec le conduit intérieur (3), le conduit extérieur (7) et le tube extérieur (8) ainsi qu'avec les nervures (10), **caractérisée en ce que**
les nervures (10) et les nervures extérieures (12) comportent une section trapézoïdale.

2. Conduite selon la revendication 1, le milieu liquide à thermoréguler étant logé ou coulant dans le conduit intérieur (3) et le milieu thermorégulateur liquide étant logé ou coulant dans au moins un cala de conduction (11) entre le conduit intérieur (3) et le conduit extérieur (7).

3. Conduite selon l'une quelconque des revendications 1 ou 2, le milieu à thermoréguler liquide étant logé ou coulant dans au moins un canal de conduction (11) et le milieu thermorégulateur liquide étant logé ou coulant dans le conduit intérieur (3) et dans au moins un canal de conduction extérieur (13) entre le conduit extérieur (7) et un tube extérieur (8).

4. Conduite selon l'une quelconque des revendications 1 à 3, l'épaisseur de paroi du conduit intérieur (3) et/ou du conduit extérieur (7) et/ou du tube extérieur (8) étant de 0,6 à 3 mm, de préférence de 0,8 à 2,5 mm et de façon préférée de 0,9 à 2,2 mm.

5. Conduite selon l'une quelconque des revendications 1 à 4, le conduit intérieur (3) et/ou le conduit extérieur (7) et/ou le tube extérieur (8) est/sont constitué(s) de forme cylindrique ou pour l'essentiel de forme cylindrique.

6. Conduite selon l'une quelconque des revendications 1 à 5, le conduit intérieur (3) étant disposé de façon concentrique à l'intérieur du conduit extérieur (7) et/ou le conduit extérieur (7) ou l'ensemble composé du conduit intérieur (3) et du conduit extérieur (7) est disposé de façon concentrique à l'intérieur du tube extérieur (8).

7. Conduite selon l'une quelconque des revendications 1 à 6, le rapport entre le diamètre intérieur d du conduit intérieur (3) et la distance radiale rᵢ d'un canal de conduction (11) entre le conduit intérieur (3) et le conduit extérieur (7) et/ou la distance radiale rₐ d'un canal de conduction extérieur (13) entre le conduit extérieur (7) et le tube extérieur (8) étant de 3 à 15, de préférence de 4 à 14 et de façon préférée de 4 à 12.

8. Conduite selon l'une quelconque des revendications 1 à 7, le diamètre intérieur d du conduit intérieur étant de 2 à 15 mm, de préférence de 3 à 13 et de façon préférée de 4 à 12 mm.

9. Conduite selon l'une quelconque des revendications 1 à 8, la distance radiale rᵢ d'un canal de conduction (11) et/ou la distance radiale rₐ d'un canal de conduction extérieur (13) étant de 0,5 mm à 3,00 mm, de préférence de 0,6 à 2,0 mm et de façon préférée de 0,8 à 1,5 mm.

10. Conduite selon l'une quelconque des revendications 1 à 9, la conduite (1) étant partie constituante d'un véhicule automobile et le milieu thermorégulateur étant un liquide réfrigérant de préférence réchauffé et/ou un carburant ou un carburant reconduit.

11. Conduite selon l'une quelconque des revendications 1 à 10, le milieu thermorégulateur coulant d'abord à travers les canaux de conduction (11) entre le conduit intérieur (3) et le conduit extérieur (7) dans une première direction le long de la conduite (1), une zone de renvoi (9) étant prévue pour changer de direction le milieu thermorégulateur dans les canaux extérieurs (13) entre le conduit extérieur (7) et la tube extérieur (8) et le milieu thermorégulateur coulant à travers les canaux extérieurs (13) dans une deuxième direction opposée à la première direction le long de la conduite (1).
